# EUROPEAN PATENT SPECIFICATION

(11) **EP 2 898 499 B1**
(45) Date of publication and mention of the grant of the patent: **28.12.2016**
(21) Application number: 13771174.3
(22) Date of filing: 20.09.2013
(51) Int. Cl.: G09F 15/02, G09F 1/10, G09F 7/18

(54) **DISPLAY SUBSTRATE**
ANZEIGESUBSTRAT
SUBSTRAT D'AFFICHAGE

(30) Priority: 21.09.2012 GB 201216894; 29.07.2013 GB 201313510
(43) Date of publication of application: 29.07.2015
(73) Proprietor: AUGUSTUS MARTIN LIMITED, London E3 3PB (GB)
(72) Inventor: PATTISON, Daniel, London E3 3PB (GB); STOKES, Glyn, London E3 3PB (GB); BARROW, Lascelle, London E3 3PB (GB)
(74) Representative: Hanson, William Bennett
(86) International application number: PCT/GB2013/052468
(87) International publication number: WO 2014/045050

(56) References cited:
- FR-A1- 2 459 520
- JP-A- 2006 292 158
- JP-A- 2010 229 247
- JP-A- 2012 179 838
- US-A1- 2004 001 944

## Description

### Background to the Invention

This invention relates to a graphic display substrate and a graphic display sheet for removable attachment thereto.

In many situations, display materials that are attached to walls have to be interchanged frequently. Examples include advertisements or other information in retail establishments.

A known removable display material is YUPOTako ®, described at http: / / www. superyupo.com/ fileadmin/ templates/ yupo.com/ editor/ download s/YUPOTako_Factsheet_web.pdf. This can be provided in the form of a printed poster, banner or label having a micro suction layer including microscopic voids that will adhere to a smooth surface such as a window or a suitably coated or clad wall. This known material can be prohibitively expensive for many uses, as a new sheet of the material is required whenever the information is to be changed.

JP 2006 292158 A describes a system according to the preamble of claim 1.

### Summary of the Invention

The present invention provides a display system according to claim 1.

The relatively inexpensive graphic display sheet can be removed and replaced many times in order to display a succession of different graphics.

In one embodiment, the adhesive layer and the micro suction layer are provided on opposite sides of a base layer which may be of paper or synthetic material.

The adhesive layer may comprise a permanent, semi-permanent or removable adhesive. A protective release paper may be provided on the adhesive layer; an outer release paper may be provided on the micro suction layer.

In one embodiment, the micro vacuum receptor layer is provided by a polyester-based varnish. The printed display side is one side of the base material, such as paper.

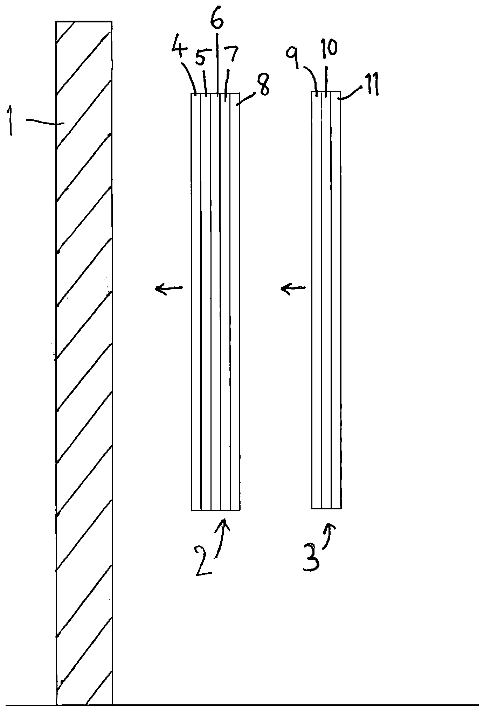

### Brief Description of the Drawing

The invention will now be described in more detail, by way of example only, with reference to the accompanying drawing, the single figure of which is a schematic sectional view of a graphic display assembly according to an embodiment of the invention.

### Detailed Description of Particular Embodiments

The drawing shows a wall 1, a display substrate 2 for attachment to the wall, and a graphic display sheet 3 for removable attachment to the display substrate.

The display substrate 2 and graphic display sheet 3 comprise layers etc. 4 to 11. The thicknesses of these are exaggerated in the drawings and are depicted as the same, whereas in reality some of the thicknesses differ by orders of magnitude.

The display substrate 2 comprises a base layer 6, such as a sheet of paper, card or plastics. A rear side of the base layer 6 bears a layer 5 of permanent, semi-permanent or removable adhesive. The adhesive layer 5 is protected by a release paper 4 which is removed before applying the substrate 2 to the wall 1.

The opposite, i.e. front, side, of the base layer 6 carries a micro suction coating 7. This polymeric layer, including microscopic voids or apertures, is protected by a polyethylene release paper 8.

The graphic display sheet 3 comprises a base material 10 of widely available paper, card or printable synthetic material. A rear side of the base material is formed at least partially with a smooth surface to provide a micro vacuum receptor 9. For example, the micro vacuum receptor can be high gloss, silicone free, polyester-based varnish 9 that can be tinted or clear and can be applied in a pattern or as a flood coating.

An image, message or other indicia 11 is printed on a visible side of the base material 10.

After fixing the display substrate 2 to the wall 1, and removing the external release paper 8, the graphic display sheet 3 is applied to the display substrate. As the micro vacuum receptor 9 is pressed against the micro suction coating 7, air is expelled from the microscopic voids in the latter, forming a vacuum which keeps the graphic display sheet 3 in place until it is to be replaced.

The micro vacuum receptor 9 improves the attraction between the micro suction coating 7 and the graphic display sheet 3. It creates an air-tight seal between the display substrate 2 and the graphic display sheet, ensuring that they remain in contact; use of paper without a micro vacuum receptor could allow air and/or moisture to enter the contact area and break the seal. Thus, different materials can be used as the base material 10, their adhesion to the display substrate 2 being normalised by the micro vacuum receptor 9.

Also, the micro vacuum receptor 9 prevents the deposition of paper or synthetic fibres from the base material 10 on the micro suction coating 7. Such fibres could otherwise remain on the coating 7 and significantly reduce the efficiency of the adhesion over multiple changes of graphic display sheet 3, ultimately preventing the creation of a seal.

Paper may have a surface preparation including calcium and wax. Synthetic sheets may similarly be coated with waxes, silicones and/or plasticisers. If these chemical coatings repeatedly come into contact with a micro vacuum material such as the micro vacuum coating 7, they can reduce its adhesion and impair or destroy its sealing capability. However, such coated papers and plastics can be used as the base material 10 in the invention, because the micro vacuum receptor 9 forms a barrier so that the chemical coatings will not reach the micro vacuum coating 7.

A further advantage of the micro vacuum receptor 9 is that it stabilises thinner base materials 10 by countering surface tension when the indicia 11 are printed on the graphic display sheet 3.

The invention allows a frequent change of wall mounted display material without changing the method of attachment. It can be reused many more times than adhesive based systems. As the graphic display sheet 10 can be based on paper, it is environmentally sensitive. Finally, the invention does not require the disposal of any suspension system or attachment means when the display is changed.

Whilst the display substrate particularly described above is attached to the wall with adhesive, it could alternatively be screwed, stapled or pinned to the wall.

## Claims

1. A display system comprising:
a. a display substrate (2) comprising: an adhesive layer (5) or other means for attachment to a wall (1), and a micro suction layer (7); and
b. a graphic display sheet (3) for removable attachment to the micro suction layer (7), having a printed display side (11);
**characterised in that** the graphic display sheet (3) has a micro vacuum receptor layer (9) provided by a silicone-free varnish only on a side of a base material (10) of the graphic display sheet opposite to the printed display side (11), for removable attachment to the micro suction layer (7).

2. A system according to claim 1, wherein the adhesive layer (5) and the micro suction layer (7) are provided on mutually opposite sides of a base layer (6) of the display substrate (2).

3. A system according to claim 2, wherein the base layer (6) is of paper, card or synthetic material.

4. A system according to any preceding claim, wherein the display substrate (2) comprises an adhesive layer (5) comprising a semi-permanent or removable adhesive.

5. A system according to any preceding claim, wherein the display substrate (2) comprises an adhesive layer (5) and a protective release paper (4) is provided on the adhesive layer.

6. A system according to any preceding claim, wherein an outer release paper (8) is provided on the micro suction layer (7).

7. A system according to any preceding claim, wherein the varnish (9) comprises polyester.

8. A system according to any preceding claim, wherein the base material (10) comprises paper or card.

9. A display system according to any preceding claim, comprising the wall (1); the display substrate (2) being attached to the wall by the adhesive layer (5) or other attachment means.

## Patentansprüche

1. Anzeigesystem aufweisend
a. ein Anzeigesubstrat (2) aufweisend: eine Klebstoffschicht (5) oder andere Mittel zur Befestigung an einer Wand (1) und eine Mikro-Saugschicht (7); und
b. ein Graphikanzeigeblatt (3) zur abnehmbaren Befestigung an die Mikro-Saugschicht (7), aufweisend eine gedruckte Anzeigeseite (11);
**dadurch gekennzeichnet, dass** das Graphikanzeigeblatt (3) eine Mikro-Vakuumrezeptor-Schicht (9) aufweist, die nur durch einen silikonfreien Lack an der zur gedruckten Anzeigeseite (11) gegenüberliegenden Seite des Basismaterials (10) des Graphikanzeigeblatts gebildet ist, zwecks abnehmbarer Befestigung an die Mikro-Saugschicht (7).

2. System nach Anspruch 1, bei dem die Klebstoffschicht (5) und die Mikro-Saugschicht (7) an sich gegenüberliegende Seiten der Basisschicht (6) des Anzeigesubstrats (2) angeordnet sind.

3. System nach Anspruch 2, bei dem die Basisschicht (6) aus Papier, Karton oder synthetischem Material besteht.

4. System nach einem der voranstehenden Ansprüche, bei dem das Anzeigesubstrat (2) eine Klebstoffschicht (5) aufweist, die einen semi-permanenten oder entfernbaren Klebstoff aufweist.

5. System nach einem der voranstehenden Ansprüche, bei dem das Anzeigesubstrat (2) eine Klebstoffschicht (5) aufweist und ein Schutzpapier (4) auf der Klebstoffschicht angeordnet ist.

6. System nach einem der voranstehenden Ansprüche, bei dem ein äußeres Schutzpapier (8) auf der Mikro-Saugschicht (7) angeordnet ist.

7. System nach einem der voranstehenden Ansprüche, bei dem der Lack (9) Polyester aufweist.

8. System nach einem der voranstehenden Ansprüche, bei dem das Basismaterial (10) Papier oder Karton enthält.

9. Anzeigesystem nach einem der voranstehenden Ansprüche, aufweisend die Wand (1); das durch die Klebstoffschicht (5) oder andere Mittel zur Befestigung an die Wand angebrachte Anzeigesubstrat (2).

## Revendications

1. Système d'affichage comprenant :
a. un substrat d'affichage (2) comprenant : une couche adhésive (5) ou un autre moyen de fixation à une paroi (1), et une couche de micro-succion (7) ; et
b. une feuille d'affichage graphique (3) destinée à être fixée de manière amovible à la couche de micro-succion (7), présentant un côté d'affichage imprimé (11) ;
**caractérisé en ce que** la feuille d'affichage graphique (3) présente une couche de réception de micro-vides (9) fournie par un vernis sans silicone uniquement sur un côté d'un matériau de base (10) de la feuille d'affichage graphique opposé au côté d'affichage imprimé (11), destinée à être fixée de manière amovible à la couche de micro-succion (7).

2. Système selon la revendication 1, dans lequel la couche adhésive (5) et la couche de micro-succion (7) sont prévues sur des côtés mutuellement opposés d'une couche de base (6) du substrat d'affichage (2).

3. Système selon la revendication 2, dans lequel la couche de base (6) est du papier, du carton ou une matière synthétique.

4. Système selon l'une quelconque des revendications précédentes, dans lequel le substrat d'affichage (2) comprend une couche adhésive (5) comprenant un adhésif semi-permanent ou amovible.

5. Système selon l'une quelconque des revendications précédentes, dans lequel le substrat d'affichage (2) comprend une couche adhésive (5) et un papier de protection retirable (4) est prévu sur la couche adhésive.

6. Système selon l'une quelconque des revendications précédentes, dans lequel un papier extérieur retirable (8) est prévu sur la couche de micro-succion (7).

7. Système selon l'une quelconque des revendications précédentes, dans lequel le vernis (9) comprend du polyester.

8. Système selon l'une quelconque des revendications précédentes, dans lequel le matériau de base (10) comprend du papier ou du carton.

9. Système d'affichage selon l'une quelconque des revendications précédentes, comprenant la paroi (1) ; le substrat d'affichage (2) étant fixé à la paroi par la couche adhésive (5) ou un autre moyen de fixation.
